# EUROPÄISCHE PATENTANMELDUNG

(11) **EP 1 175 028 A2**
(43) Veröffentlichungstag der Anmeldung: **23.01.2002**
(21) Anmeldenummer: 01440180.6
(22) Anmeldetag: 21.06.2001
(51) Int. Cl.: H04B 10/17

(54) **"Verfahren zur Übertragung von optisch kodierten Signalen, System sowie optischer Signalprozessor"**

(30) Priorität: 17.07.2000 DE 10035074
(71) Anmelder: ALCATEL, 75008 Paris (FR)
(72) Erfinder: Pfeiffer, Thomas Dr., 70569 Stuttgart (DE)
(74) Vertreter: Rausch, Gabriele, Dr.

(57) **Zusammenfassung**

Es wird ein Verfahren zur Übertragung von optisch kodierten Signalen sowie ein System zur Übertragung von optisch kodierten Signalen vorgestellt. Durch Einsatz eines optischen Signalprozessors wird ein modifiziertes Signal erzeugt, das den Einsatz von einfachen optischen Empfängern ermöglicht.

## Beschreibung

Die Erfindung geht aus von einem Verfahren zur Übertragung von optisch kodierten Signalen bestehend aus folgenden Schritten, spektrales Kodieren von optischen Signalen in Sendern, Übertragen der spektral kodierten Signale über eine Übertragungsstrecke, Invertieren des Superpositionssignals, optisches Addieren des Superpositionssignals mit dem invertierten Signal zu einem Summensignal und Auswerten des Summensignals in einem optischen Empfänger.

Die Erfindung geht weiterhin von einem System zur Übertragung von optisch kodierten Signalen aus. Dieses System besteht aus Sendern zum Aussenden von optisch kodierten Signalen, Übertragungsstrecken von optischen Empfängern mit Dekodierern für optische kodierte Signale. Die Erfindung geht weiterhin von einem optischen Signalprozessor in einem Übertragungssystem für kodierte optische Signale aus.

Ein Verfahren sowie ein System zur Übertragung von optische kodierten Signalen ist beispielsweise aus der DE OS 197 23 103.9 bekannt. Ein optisches Übertragungssystem für die Übertragung von optische kodierten Signalen enthält Sender, Übertragungsstrecken sowie Empfänger. Jeder Sender enthält einen Kodierer, in dem die zu übertragenden Signale vor ihrer Aussendung in das optische Übertragungssystem kodiert werden. Die Kodierung erfolgt auf optischem Wege beispielsweise durch Frequenzkodierung mittels eines optischen Filters. Jeder Empfänger im Übertragungssystem, der die vom Sender ausgesendeten optischen Signale empfangen will, muss einen Dekodierer enthalten, der auf einem speziellen Kodierer eines Senders abgestimmt ist. Im einfachsten Fall sind die Frequenzbereiche, die für optische Signale durchlässig und die Frequenzbereiche, die für optische Signale gesperrt sind, bei Kodierer im Sender sowie Dekodierer im Empfänger gleich. Diese Multipunkt-zu-Multipunkt-Übertragungssysteme sind unter dem Begriff CDM (code division multiplex) bekannt. Die Empfänger in einem CDM-Übertragungssystem sind im Stand der Technik als Differenzempfänger aufgebaut. Nur so können die bei einem CDM Übertragungsverfahren auftretenden Effekte des Übersprechens eliminiert werden. Die Anforderungen an die Differenzempfänger sind entsprechend hoch und führen zu aufwendigen Geräten. So ist aus der DE-OS 197 48 756 ein Differenzempfänger bekannt, bei dem die beiden optischen Zweige des Empfängers aufwendig auf einander abgestimmt werden. Dieser aufwendige Aufbau des Empfängers für die Verwendung in einem CDM-System limitiert durch abweichende Eigenschaften der Bauteile die Bitrate für einen Übertragungskanal auf unter 1 Gbit/s. Weitere Abstimmungen, die zur Erhöhung der Bitrate notwendig wären, führen zu weiterem Aufwand und weiteren Kosten für die Herstellung eines Empfängers.

Es ist daher Aufgabe der Erfindung ein CDM-Übertragungsverfahren sowie ein CDM-System vorzuschlagen, in dem der Aufwand, der in den Empfängern betrieben werden muss, deutlich reduziert ist. Das erfindungsgemäße Verfahren stellt durch Umwandlung der kodierten optischen Signale in ein Summensignal ein optische Signal zur Verfügung, das mit einem einfachen optischen Empfänger ausgewertet werden kann. Das erfindungsgemäße System wird um einen optischen Signalprozessor erweitert, der die optische kodierten Signale so modifiziert, dass der Einsatz einfacher optischer Empfänger möglich ist.

Vorteilhafterweise weist der optische Signalprozessor Mittel zum Empfangen eines aus kodierten übertragenen Signalen bestehenden Superpositionssignals auf. Weiterhin sind in ihm Mittel zum Invertieren des Superpositionssignals, Mittel zum Addieren des Superpositionssignals und des invertierten Signals und Mittel zum Übertragen dieses Summensignals über die Übertragungsstrecke vorhanden. In einer besonders vorteilhaften Ausführungsform besteht der optische Signalprozessor aus einem Emitter für ASE (amplified spontanous emission) und einem Reflektor, sowie einem anschließenden Koppler für die beiden in den optischen Zweigen entstehenden Signalen.

Eine weitere vorteilhafte Ausführungsform verwendet einen speziell für die Anforderungen als optischer Signalprozessor ausgelegten Emitter für ASE mit einem hohen Ausgangspegel von ASE bei niedriger Eingangsleistung und einem niedrigen Ausgangspegel bei hoher Eingangsleistung des Superpositionssignals. Eine weitere Ausführungsform verwendet eine optoelektrische Wandlung, eine Invertierung und einen optischen Sender, um das gewandelte Signal mit dem optischen Orginalsignal, das zeitlich an das verarbeitete Signal angepasst wird, wieder zur kombinieren.

Ausführungsbeispiele der Erfindung sind in den Figuren dargestellt und in der nachfolgenden Beschreibung näher erläutert.
Es zeigt:
Figur 1 Schema eines CDM-Übertragungssystems,
Figur 2 Darstellung der Signale im CDM-Übertragungssystem,
Figur 3 resultierendes Signal nach Dekodierung im Empfänger und
Figur 4 a bis c Ausführungsformen eines optischen Signalprozessors.

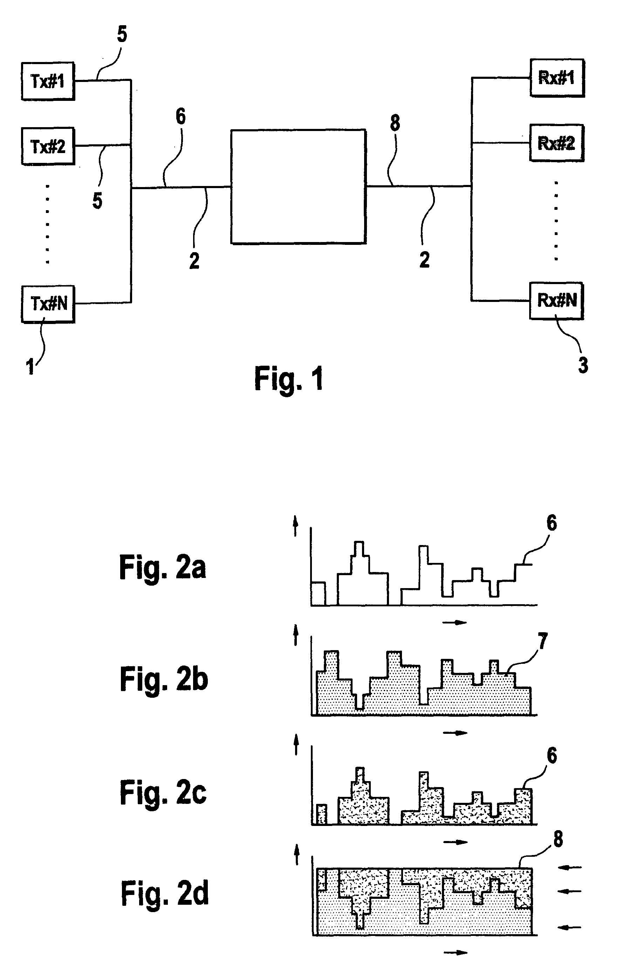

Figur 1 zeigt das Schema einer Multipunkt-zu-Multipunkt-Verbindung unter Verwendung des CDM-Verfahrens. Es ist eine Vielzahl von Sendern 1 vorhanden. Diese Sender sind mit einer Übertragungsstrecke 2 verbunden.

In die Übertragungsstrecke ist ein optischer Signalprozessor 4 eingebunden. Empfangsseitig sind Empfänger 3 an die Übertrogungsstrecke 2 angeschlossen.
Figur 2 zeigt, wie sich die optischen Signale im Verlauf des Übertragungsverfahrens wandeln. Jeder Sender 1 sendet ein kodiertes optische Signal 5 aus. Diese kodierten optischen Signale 5 werden zur Übertragung über die Übertragungsstrecke 2 zusammengefasst. Sie überlagern sich ungestört zu einem Superpositionssignal 6 von kodierten Signalen. Das resultierende Signal ist in Figur 2a als Intensität über einer Zeitachse dargestellt. Das Superpositionssignal 6 gelangt in den optischen Signalprozessor 4. Hier wird ein invertiertes Signal 7 erzeugt. Das invertierte Signal enthält keine Kodierungsinformationen, sondern invertiert lediglich die Intensität des Superpositionssignals 6. Das invertierte Signal 7 ist in Figur 2 b dargestellt. Das invertierte Signal 7 wird mit dem Superpositionssignal 6, wie in Figur 2 c dargestellt, addiert. Das resultierende Summensignal 8, dargestellt in Figur 2d, enthält die komplette Kodierungsinformation des ursprünglichen Superpositionssignals 6. Das Summensignal 8, das den optischen Signalprozessor 4 verlässt, enthält keine Intensitätsmodulation mehr. Dieses nicht mehr intensitätsmodulierte Signal wird über die Übertragungsstrecke 2 weiterverteilt und gelangt an die Empfänger 3. Im Empfänger 3 durchläuft das Summensignal 8 einen Dekodierer. Dabei werden alle Kanäle, deren Kodierung nicht mit der Dekodierung des Empfängers übereinstimmt, mit einer konstanten Leistung durchgelassen. Für die Kanäle, deren Kodierung nicht der Dekodierung des Empfängers entspricht, wird eine spektralkodierte "1" mit einer bestimmten Leistung transmittiert. Da der optische Prozessor auch im Falle einer "0" denselben Signalpegel liefert, wird im Empfänger ebenfalls dieselbe Leistung transmittiert. Nur der Kanal mit der passenden Kodierung erzeugt ein Ausgangssignal, das bei einer "1" etwas größer ist bei einer "0". Als Summe der Kanäle erhält man im Empfänger nach dem Dekodierer einen konstanten optischen Leistungspegel mit zusätzlichen kleinen Leistungspulsen über, die zu dem dekodierten Kanal im Falle einer kodierten "1" gehören. Diese Signalstruktur kann von konventionellen Empfängern verarbeitet werden.

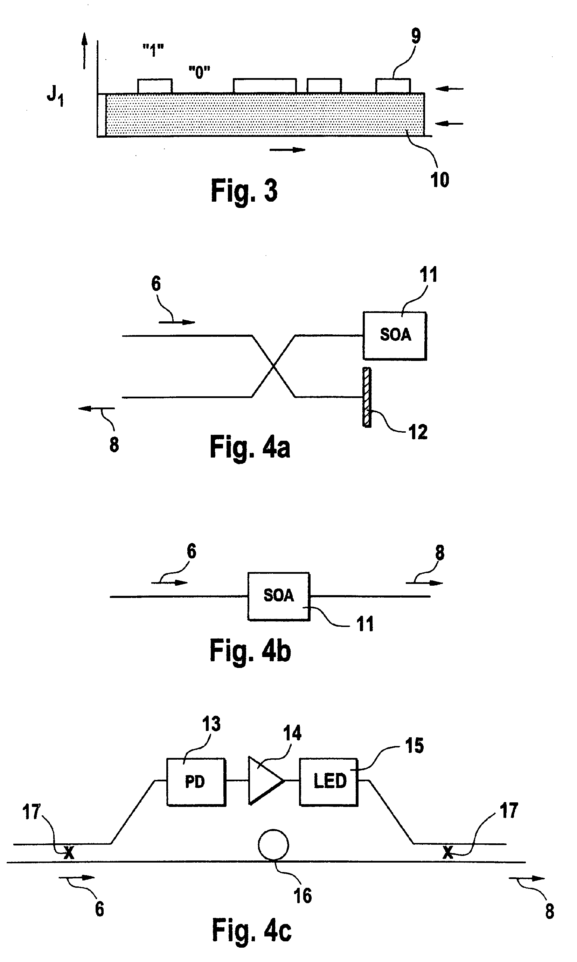

Das resultierende Signal ist in Figur 3 dargestellt. Das Basissignal 10, das ist die Summe der nichtpassenden Kanäle, liefert eine konstante optische Leistung mit einer Intensität l1. Auf der Basisleistung I1 erkennt man Leistungserhöhungen 9, die einer "1" für den dekodierten Kanal entsprechen. Die Basisleistung l1 entspricht dabei einer "0" für den dekodierten Kanal. Durch den Einsatz des optischen Signalprozessors werden die Probleme mit dem Nebensprechen der optischen Kanäle deutlich reduziert.

In einer weiteren Ausführungsform ist die Reihenfolge des Verfahrens verändert. Der optische Signalprozessor ist direkt mit den einzelnen Sendern 1 verbunden. Somit wird ein kodiertes optisches Signal 5 mit optischen Signalprozessoren 4 invertiert und mit dem Ausgangssignal addiert. Diese einzelnen aufbereitenden Signale werden anschließend zusammengefasst und über die Übertragungsleitung 2 übertragen.

In einer weiteren Ausführungsform sind optische Signalprozessoren direkt vor den einzelnen Empfängern angeordnet. Dann werden die Superpositionssignale an den Empfängern invertiert, mit sich selbst addiert, und im Empfänger ausgewertet.

Als optische Signalprozessoren kommen unterschiedliche Ausführungsformen zum Einsatz.

Figur 4 a zeigt eine Ausführungsform mit einem Emitter für breitbandige ASE (amplified spontanous emission). Das Superpositionssignal 6 liegt eingangsseitig sowohl an dem Emitter 11 als auch an einem Reflektor 12 an. Ein solcher Emitter für spontane verstärkte Emission ist in der Anmeldung DE 100 13 718.0 beschreiben. Beispielsweise kommt als Emitter ein Halbleiterverstärker zum Einsatz. Der Halbleiterverstärker wird mit konstantem Betriebsstrom angeregt, sodass eine konstante ASE emittiert wird. Die Emission ist solange konstant, solange kein optisches Signal am Halbleiterverstärker anliegt. Kommt über die Übertragungsstrecke eine kodierte 1 an, wird die ASE des Halbleiterverstärkers verringert. Liegt eingangsseitig im Superpositionssignal 6 ein geringes Signal beispielsweise eine "0" an, emittiert der Halbleiterverstärker seine Maximum an ASE. Die emittierte ASE-Leistung ist gegenüber dem Eingangsleistung invertiert. Die so invertierte ASE-Leistung wird mit dem reflektierten Spektrum zusammengekoppelt und so zu einem Summensignal überlagert.

In der Ausführungsform nach Figur 4b wird als Emitter für ASE beispielsweise ein Halbleiterverstärker verwendet, der ein hohes Grundrauschen in Form von ASE aufweist. Gleichzeitig wird der Halbleiterverstärker so eingestellt, dass er das durchgelassene Signal nur zu geringen Anteilen verstärkt. Liegt ein optisches Signal mit hoher Leistung an dem Halbleiterverstärker an, emittiert er lediglich einen kleinen Anteil von ASE, während der Halbleiterverstärker bei einem großen optischen Signal einen großen Anteil ASE generiert. Ist der Halbleiterverstärker optimal eingestellt, resultiert daraus eine quasi konstante Ausgangsleistung.

Die Ausführungsform nach 4c zeigt eine weiter Realisierung für den optischen Signalprozessor. Das Superpositionssignal 6 wird eingangsseitig an einem Abzweig 17 aufgespalten. In einem ersten optischen Zweig durchläuft das Signal eine Photodiode 13, einen Invertierer 14 und wird über eine LED 15 wieder in den optischen Zweig eingekoppelt. Im zweiten optischen Zweig ist eine Verzögerungsleitung 16 vorhanden. Beide optische Zeige werden in einem weiteren Abzweig 17 zusammengekoppelt. Bei dieser Ausführungsform wird das optische Signal elektrisch gewandelt, verstärkt, invertiert und eventuell aufbereitet. Anschließend wird das optische Signal als intensitätsmoduliertes Signal auf eine breitbandige optische Quelle, beispielsweise eine LED, gegeben. Das invertierte Signal des Zweiges und das Originalsignal , zeitlich angepasst, im anderen optischen Zweig werden über den Abzweig 17 überlagert.

Eine weitere vorteilhafte Ausführungsform verwendet statt einer breitbandigen LED 15 einen Laser als Sender in der Anordung der Fig. 4c. Der Laser sendet dabei vorzugsweise außerhalb des Nutzbereich des Übertragungsbandes. Eine beispielhafte Wellenlänge wäre dabei 1300 nm Laseremission bei einer Nutzung des 1500 nm Bandes für die Übertragung. Bei einer solchen Ausführungsform sind die Filter in den Empfängern transparent für die Laserwellenlänge.

Die Verarbeitung des gewandelten optischen Signals erfolgt in einer anderen Ausführungsform in mehreren Stufen. Das resultierende Summensignal wird dabei auf seine "Qualität" ausgewertet. Das resultierende Signal soll dabei möglich nahe an den Idealzustand des Summensignals 8 herankommen. Zeigt die Auswertung ein negatives Ergebnis, so wird die Aufarbeitung des Signals wiederholt. Dabei werden in einer weiteren Ausführungsform in mindestens einem Signalzweig auch eine Verbesserung der Signalqualität wie beispielsweise durch Verstärkung , Wiedergewinnen der Signalstruktur, des Signaltaktes usw. durchgeführt.

Die vorgestellte Erfindung reduziert auch gleichzeitig Probleme mit dem Rauschen im optischen Kanal. Da die Rauschanteile sowohl im Originalsuperpositionssignal als auch im invertierten Signal vorhanden sind werden sie beim vorliegenden erfindungsgemäßen Verfahren herausgemittelt und stellen für die Detektion des Signals kein Problem mehr dar.

## Patentansprüche

1. Verfahren zur Übertragung von optisch kodierten Signalen bestehend aus den folgenden Schritten:
- Spektrales Kodieren von optischen Signalen (5) in den Sendern (1),
- Invertieren der optisch kodierten Signale (5)
- optisches Addieren des optisch kodierten Signale (5) mit den invertierten Signalen (7) zu einem Summensignal (8),
- Übertragen des Summensignals (8) über eine Übertragungsstrecke (2)
- Auswerten des Summensignals (8) mit einem optischen Dekodierer im Empfänger (3).

2. System zur Übertragung von optisch kodierten Signalen bestehend aus Sendern (1) zum Aussenden von optisch kodierten Signalen (5), Übertragungsstrecken (2) und optischen Empfängern (3), die Dekodierer für die optisch kodierten Signale (5) enthalten, **dadurch gekennzeichnet, dass** mindestens ein optischer Signalprozessor (4) im Übertragungssystem enthalten ist, der die übertragenen kodierten optischen Signale (5) mit einem invertierten Signal (7) überlagert und das Summensignal (8) für die Auswertung im den Empfängern weitergibt.

3. Optischer Signalprozessor (4) in einem CDM-Übertragungssystem mit
- Mitteln zum Empfangen von kodierten Signalen (5)
- Mitteln zum Invertieren
- Mittel zum Addieren der optisch kodierten Signale (5) und der invertierten Signale (7) und
- Mittel zum Aussenden der Summensignale (8).

4. Optischer Signalprozessor (4) nach Anspruch 3 bestehend aus einem Emitter für ASE (11) (amplified spontanous emission) und einem Reflektor (12), wobei das reflektierte Signal des Reflektors und das ASE Signal des Emitters (11) mit einem Koppler zu einem Summensignal (8) addiert werden.

5. Optischer Signalprozessor (4) nach Anspruch 3 bestehend aus einem Emitter für ASE mit einem hohen ASE - Ausgangspegel bei niedriger Leistung des Superpositionssignals (6) und niedrigen ASE - Ausgangspegel bei hoher Leitung der Superpositionssignals.

6. Optischer Signalprozessor(4) mit einem ersten Signalzweig indem das optische Signal in ein elektrisches Signal gewandelt und so aufbereitet wird, dass das Signal das invertierte Orignalsignal darstellt, und einem zweiten Signalzweig aus dem das Orignalsignal zeitgenau mit dem invertierten Signal zur Verfügung gestellt wird.

7. Optischer Signalprozessor (4) nach Anspruch 3 bestehend mindestens aus einem Abzweig (17) mit einer Verzögerungsleitung (16) in einem optischen Zweig und einer optoelektischen Wandler, einer Invertierung und einem optischen Sender im zweiten optischen Zweig und einem zweiten Abzweig (17) zum Einkoppeln der Signale beider optischen Zweige.
